(19) Europäisches Patentamt
European Patent Office
Office européen des brevets

(11) Publication number: **0 211 467 B1**

(12) **EUROPEAN PATENT SPECIFICATION**

(45) Date of publication of patent specification: **18.10.95**

(51) Int. Cl.[6]: **C08L 77/00**, //C08L67/02, (C08L77/00,53:02),(C08L67/02, 53:02)

(21) Application number: **86201336.4**

(22) Date of filing: **29.07.86**

The file contains technical information submitted after the application was filed and not included in this specification

(54) **Impact resistant polymeric compositions.**

(30) Priority: **31.07.85 US 761120**
**31.07.85 US 761119**

(43) Date of publication of application:
**25.02.87 Bulletin 87/09**

(45) Publication of the grant of the patent:
**18.10.95 Bulletin 95/42**

(84) Designated Contracting States:
**BE CH DE FR GB IT LI NL SE**

(56) References cited:
**EP-A- 0 085 115**
**EP-A- 0 173 380**
**US-A- 4 427 828**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Gelles, Richard**
**2151 Kirkwood No. 266**
**Houston**
**Texas 77077 (US)**
Inventor: **Gergen, William Peter**
**11311 Hylander**
**Houston**
**Texas 77070 (US)**
Inventor: **Lutz, Robert Gardiner**
**8322 Twining Oaks**
**Spring**
**Texas 77379 (US)**

**EP 0 211 467 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to impact resistant polymeric compositions.

Thermoplastic polyamides, such as nylon 6,6 and polyesters such as poly (1,4-butylene terephthalate) (PBT) and poly(ethylene terephthalate) (PET), are a class of materials which possess a good balance of properties comprising strength and stiffness which make them useful as structural materials. However, for a particular application, a thermoplastic polyamide or thermoplastic polyester may not offer the combination of properties desired, and therefore, means to correct this deficiency are of interest.

One major deficiency of thermoplastic polyamides and polyesters is their poor resistance to impact, especially when dry. A particularly appealing route to achieving improved impact resistance in a thermoplastic is by blending it with another polymer. It is well known that stiff plastics can often be impact modified by addition of an immiscible low modulus rubber. However, in general, physical blending of polymers has not been a successful route to toughen thermoplastic polyamides and polyesters. This is due to the poor adhesion immisicible polymers typically exhibit with each other. As a result, interfaces between blend component domains represent areas of severe weaknesses, providing natural flows which result in facile mechanical failure.

It is well known to those skilled in the art that hydrogenated block copolymers of styrene and butadiene possess many of the properties which are required for impact modification of plastics. They have a low glass transition, low modulus rubber phase which is required for toughening. Because they contain little unsaturation, they can be blended with high processing temperature plastics without degrading. In addition, they are unique compared to other rubbers in that they contain blocks which are microphase separated over application and processing conditions. This microphase separation results in physical crosslinking, causing elasticity in the solid and molten states. Such an internal strength mechanism is often required to achieve toughness in the application of plastic impact modification. In addition, melt elasticity of the block copolymer during processing can, under the right conditions, enable it to be finely dispersed with another polymer in a stable interpenetrating co-continuous phase structure. A stable, fine dispersion is desirable in a rubber modified plastic.

Proof that hydrogenated block copolymers of styrene and butadiene are useful plastic impact modifiers can be seen in their widespread use for modifying polyolefins and polystyrene. For these blends, interfacial adhesion is great enough to achieve toughening.

Although the hydrogenated block copolymers do have many of the characteristics required for plastic impact modification, they are deficient in modifying many materials which are dissimilar in structure to styrene or hydrogenated butadiene. Blends of the hydrogenated block copolymer with dissimilar plastics are often not tough due to a lack of interfacial adhesion.

A route to achieve interfacial adhesion between the hydrogenated block copolymer and a dissimilar material is by chemically attaching to the block copolymer functional moieties which interact with the dissimilar material. Such interacting includes chemical reaction, hydrogen bonding, and dipole-dipole interactions.

U.S. patent specification 4,174,358 discloses a broad range of low modulus polyamide modifiers. However, this patent specification does not disclose or suggest the use of modified block copolymers of styrene and butadiene.

It has previously been proposed to increase the impact strength of polyamides and polyesters by addition of a modified block copolymer. U.S. patent specification 4,427,828 disclosed blends of thermoplastic polyamide with a modified block copolymer. Specifically, the block copolymer is a partially hydrogenated monovinylaryl/conjugated diene to which is attached anhydride moieties by the so-called "ENE" reaction. Such modified block copolymers are deficient because the ENE reaction depends on unsaturation in the base polymer for reaction sites. A reasonable amount of residual unsaturation must be present in order to obtain an advantageous degree of functional moieties onto the base polymer. Since the ENE reaction cannot be carried out so that all the double bonds on the base polymer are scavenged, the result of such a process is a modified block copolymer which contains too high a level of unsaturation for successful impact modification of high processing temperature thermoplastic polyamides and polyesters.

The 'ENE' process as described in the prior art results in a modified polymer product which is substituted at a position on the polymer backbone which is allylic to the double bond. The reaction can be shown for maleic anhydride as follows:

a) to main chain unsaturation

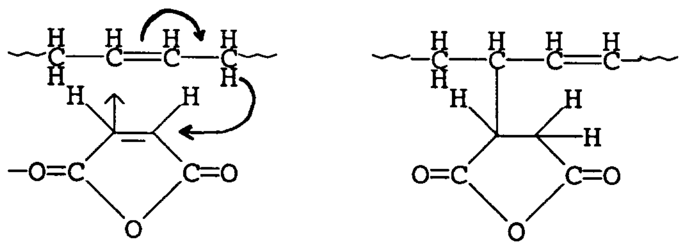

Allylic position

b) to vinyl unsaturation

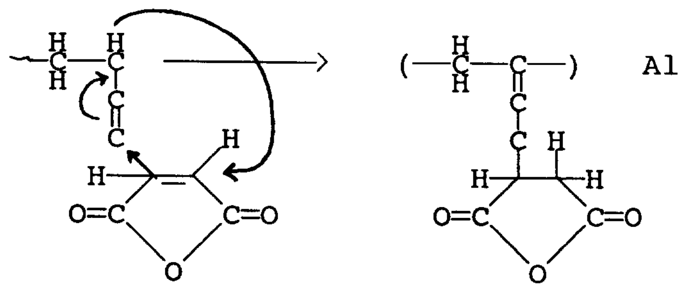

Allylic position

wherein a) represents addition across a double bond in the main chain of the base polymer and b) represents addition across a double bond occurring in a side chain. After addition and isomerization the substitution is positioned on a carbon allylic to the double bond.

The allylically substituted polymers are prone to thermal degradation due to their thermal instability. It is known in the art that allylic substituents can undergo what has been referred to as a retro-ENE reaction, see B.C. Trivedi, B.M. Culbertson, Maleic Anhydride, (Plenum Press, New York, 1982) pp. 172-173.

Further, because the ENE reaction requires a reasonable amount of unsaturation in the precursor base polymer, as discussed previously, the resulting functionalized copolymer product will have a significant amount of residual unsaturation and will be inherently unstable to oxidation.

The International Kokai Application No. WO 83/00492 (European patent application No. 0085115 A1) disclosed blends of inter alia thermoplastic polyamide or polyester and an acid modified block copolymer. The olefin compound polymer block of the modified block copolymer was indicated to have an ethylenic unsaturation degree not exceeding 20%, preferably not exceeding 15%, whereas in the working examples selectively hydrogenated block copolymers were used as starting material, in which 90% of double bonds of the butadiene blocks were hydrogenated.

The modified block copolymers to be used according to the present invention are substituted at a secondary or tertiary carbon position at a substantially highly saturated backbone by means of a radical initiator, as shown in the exemplary reactions shown below:

c)

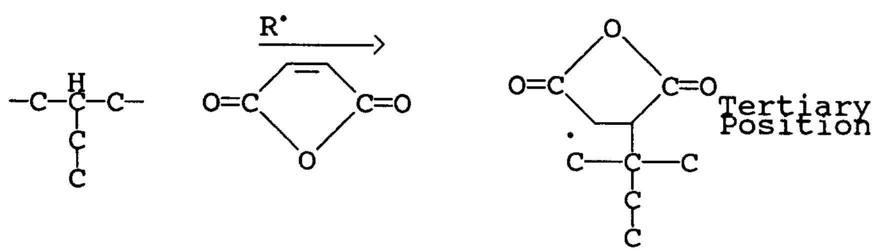

d)

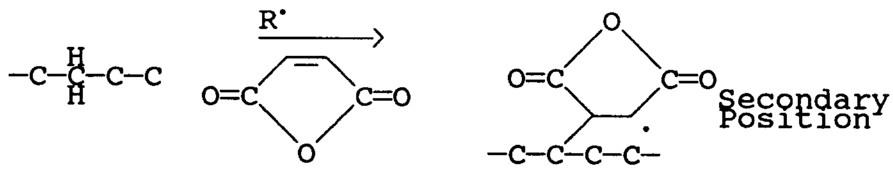


The structure of the substituted block copolymer specifically determined by the location of the functionality on the polymer backbone at a secondary or tertiary position gives the block copolymer a substantially greater degree of thermal stability.

Accordingly, the present invention provides impact resistant polymeric compositions comprising:

a polyamide having a number average molecular weight of at least 5,000 or a thermoplastic polyester; and

a functionalized selectively hydrogenated block copolymer of the formula $B_n(AB)_oA_p$ where n = 0 or 1, o is an integer of at least one, p = 0 or 1 to which has been grafted an unsaturated carboxylic acid or a salt, ester, anhydride, imide, amide or acid chloride derived therefrom, by means of a radical initiator, characterized in that:

(1) the polyamide or the thermoplastic is present in the range of from 50 to 97 per cent by weight;

(2) the functionalized hydrogenated block copolymer is present in the range of from 3 to 50 per cent by weight;

(3) each A is a polymerized monoalkenyl-aromatic hydrocarbon block having an average molecular weight in the range of from 2,000 to 115,000, in which the hydrogenation degree of the monoalkenyl-aromatic hydrocarbon units is in average less than 10%;

(4) each B prior to hydrogenation is a polymerized conjugated diene hydrocarbon block, having an average molecular weight in the range of from 20,000 to 450,000 and having an unsaturation which is less than 5% of the original unsaturation;

(5) the blocks A constitute in the range of from 5 to 95 weight per cent of the copolymer; and

(6) substantially all of the unsaturated carboxylic acid or salt, ester, anhydride, imide, amide or acid chloride derived therefrom are grafted to the block copolymer at secondary or tertiary carbon positions in the B blocks by using a free radical initiator in a concentration of from 0.01 to 1.0 per cent by weight.

The composition of such modified block copolymers and two methods of making said copolymers are described in European Patent Application 0173380 A. Said patent application describes modified block copolymers which can be prepared by free radical initiated grafting and have acid or acid derivative functional moieties attached at secondary or tertiary carbon positions. These polymers have a low level of ethylenic residual unsaturation in combination with a substantially unchanged aromatic unsaturation and are thermally stable. As a result, they are useful for impact modification of thermoplastic polyamides and polyesters.

The polyamide matrix resin of the toughened compositions of this invention is well known in the art and embraces those semi-crystalline and amorphous resins having a molecular weight of at least 5,000 and commonly referred to as nylons. Suitable polyamides include those described in U.S. patent specification Nos. 2,071,250; 2,071,251; 2,130,523; 2,130,948; 2,241,322; 2,312,966; 2,512,606; and 3,393,210. The polyamide resin can be produced by condensation of equimolar amounts of a saturated dicarboxylic acid oontaining from 4 to 12 carbon atoms with a diamine in which the diamine contains from 4 to 14 carbon atoms. Excess diamine can be employed to provide an excess of amine end groups over carboxyl end groups in the polyamide. Examples of polyamides include polyhexamethylene adipamide (nylon 66), polyhexamethylene azelaamide (nylon 69), polyhexamethylene sebacamide (nylon 610), polyhexamethylene isophthalamide and polyhexamethylene dodecanoamide (nylon 612), the polyamide produced by ring opening of lactams, i.e., polycaprolactam, polylauric lactam, poly-11-aminoundecanoic acid, bis-(paraaminocyclohexyl) methane dodecanoamide. It is also possible to use in this invention polyamides prepared by the copolymerization of two of the above polymers or terpolymerization of the above polymers or their components, e.g., for example, an adipic isophthalic acid hexamethylene diamine copolymer or polyhexamethylene tere-co-isophthalamide. Preferably the polyamides are linear with a melting point in excess of 200 °C. As great as 97 per cent by weight of the composition can be composed of polyamide or polyester, for example from 60 to 95 per cent; however, preferred compositions contain from 70 to 95 per cent, and are narrowly 75 to 90, for example 80 to 90 per cent, by weight of polyamide or polyester.

The thermoplastic polyesters employed in this invention have a generally crystalline structure, a melting point over about 120 °C, and are thermoplastic as opposed to thermosetting.

One particularly useful group of polyesters are those thermoplastic polyesters prepared by condensing a dicarboxylic acid or a lower alkyl ester thereof, or an acid halide, or anhydride derivative thereof with a glycol, according to methods well-known in the art.

Among the aromatic and aliphatic dicarboxylic acids suitable for preparing polyesters useful in the present invention are oxalic acid, malonic acid, succinic acid, glutaric acid, adipic acid, suberic acid, azelaic acid, subacic acid, terephthalic acid, isophthalic acid, p-carboxyphenoacetic acid, p,p'-dicarboxydiphenyl, p,p'-dicarboxydiphenylsufone, p-carboxyphenoxyacetic acid, p-carboxyphenoxypropionic acid, p-carboxyphenoxybutyric acid, p-carboxyphenoxyvaleric acid, p-carboxyphenoxyhexanoic acid, p,p'-dicarboxydiphenylpropane, p,p'-dicarboxydiphenyloctane, 3-alkyl-4-(β-carboxyethoxy)-benzoic acid, 2,6-naphtnalenedicarboxylic acid, 2,7-naphthalenedicarboxylic acid, and the like. Mixtures of dicarboxylic acids can also be employed. Terephthalic acid is particularly preferred.

The glycols suitable for preparing the polyesters useful in the present invention include straight chain alkylene glycols of 2 to 12 carbon atoms such as ethylene glycol, 1,3-propylene glycol, 1,6-hexylene glycol, 1,10-decamethylene glycol, 1,12-dodecamethylene glycol and the like. Aromatic glycols can be substituted in whole or in part. Suitable aromatic dihydroxy compounds include p-xylylene glycol, pyrocatechol, resorcinol, hydroquinone, or alkyl-substituted derivatives of these compounds, Another suitable glycol is 1,4-cyclohexane dimethanol. Much preferred glycols are the straight chain alkylene glycols having 2 to 4 carbon atoms.

A preferred group of polyesters are poly (ethylene terephthalate), poly(propylene terephthalate), and poly(butylene terephthalate). A much preferred polyester is poly(butylene terephthalate). Poly(butylene terephthalate), a crystalline copolymer, may be formed by the polycondensation of 1,4-butanediol and dimethylterephthalate or terephthalic acid, and has the following general formula:

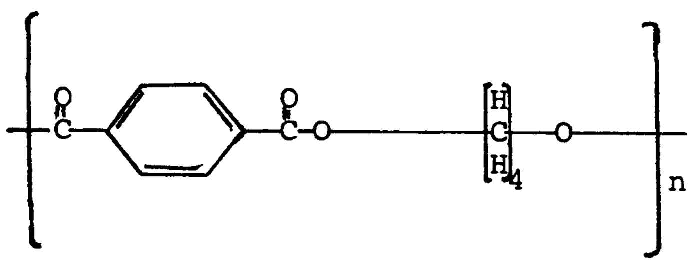

where n varies from 70 to 140. The molecular weight of the poly(butylene terephthalate) typically varies from about 20,000 to about 25,000. A suitable process for manufacturing the polymer is disclosed in British patent specification No. 1,305,130.

Commercially available poly(butylene terephthalate) is available from General Electric under the tradename VALOX® thermoplastic polyester. Other commercial polymers include CELANEX® from Celanese, TENTITE® from Eastman Kodak, and VITUF® from Goodyear Chemical.

Other useful polyesters include the cellulosics. The thermoplastic cellulosic esters employed herein are widely used as moulding, coating and film-forming materials and are well known. These materials include the solid thermoplastic forms of cellulose nitrate, cellulose acetate (e.g. cellulose diacetate, cellulose triacetate), cellulose butyrate, cellulose acetate butyrate, cellulose propionate, cellulose tridecanoate, carboxymethyl cellulose, ethyl cellulose, hydroxyethyl cellulose and acetylated hydroxyethyl cellulose as described on pages 25-28 of Modern Plastics Encyclopedia, 1971-72, and references listed therein.

Another useful polyester is polypivalolactone. Polypivalolactone is a linear polymer having recurring ester structural units mainly of the formula:

$$- CH_2—C(CH_3)_2—C(O)O-$$

i.e., units derived from pivalolactone. Preferably, the polyester is a pivalolactone homopolymer. Also included, however, are the copolymers of pivalolactone with not more than 50 mol per cent, preferably not more than 10 mol per cent of other beta-propiolactones, such as beta- propiolactone, alpha,alpha-diethyl-beta-propiolactone and alpha-methyl- alpha-ethyl-beta-propiolactone. The term "beta-propiolactones" refers to beta-propiolactone (2-oxetanone) and to derivatives thereof which carry no substituents at the beta-carbon atom of the lactone ring. Preferred beta-propiolactones are those containing a tertiary or quaternary

carbon atom in the alpha position relative to the carbonyl group. Especially preferred are the alpha, alpha-dialkyl-beta-propiolactones wherein each of the alkyl groups independently has from one to four carbon atom. Examples of useful monomers are:

alpha-ethyl-alpha-methyl-beta-propiolactone,
alpha-methyl-alpha-isopropyl-beta-propiolactone
alpha-ethyl-alpha-n-butyl-beta-propiolactone,
alpha-chloromethyl-alpha-methyl-beta-propiolactone,
alpha,alpha-bis-(chloromethyl)-beta-propiolactone, and
alpha,alpha-dimethyl-beta-ropiolactone (pivaloloactone).

See generally U.S. patent specifications Nos. 3,259,607; 3,299,171; and 3,579,489. These polypivalolactones have a molecular weight in excess of 20,000 and a melting point in excess of 120 °C.

Another useful polyester is polycaprolactone. Typical poly(ε-caprolactones) are substantially linear polymers in which the repeating unit is

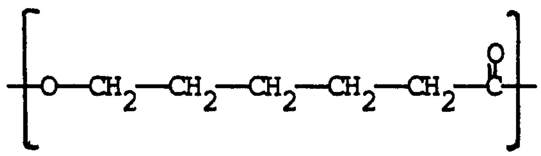

These polymers have similar properties as the polypivalolactones and may be prepared by a similar polymerization mechanism. See generally U.S. patent specifications No. 3,259,607.

Linear and branched polyesters and copolyesters of glycols and terephthalic or isophthalic acid have been commercially available for a number of years and have been described by Whinfield et al in U.S. patent specification No. 2,465,319 and by Pengilly in U.S. patent specification No. 3,047,539.

Thermoplastic polyesters such as PBT and PET are useful as injection mouldable materials which can be formed into articles which exhibit a good balance of properties including strength and stiffness. An improvement in impact strength of these materials is desirable, however.

The compositions according to the present invention may contain a polyester as well as a polyamide.

Block copolymers of conjugated dienes and vinyl-aromatic hydrocarbons which may be utilized include any of those which exhibit elastomeric properties and those which have 1,2-microstructure contents prior to hydrogenation of from about 7% to about 100%. Such block copolymers may be multiblock copolymers of varying structures containing various ratios of conjugated dienes to vinyl-aromatic hydrocarbons including those containing up to about 60 per cent by eight of vinyl-aromatic hydrocarbon. Thus, multiblock copolymers may be utilized which are linear or radial, symmetric or asymmetric and which have structures represented by the formulae A-B, A-B-A, A-B-A-B, B-A-B, $(AB)_{0,1,2...}BA$ and the like wherein A is a polymer block of a vinyl-aromatic hydrocarbon or a conjugated diene/vinyl-aromatic hydrocarbon tapered copolymer block and B is a polymer block of a conjugated diene. Preferred are block copolymers having at least one B mid block and at least two A end blocks.

The block copolymers may be produced by any well known block polymerization or copolymerization procedures including the well known sequential addition of monomer techniques, incremental addition of monomer technique or coupling technique as illustrated in, for example, U.S. patent specifications Nos. 3,251,905; 3,390,207; 3,598,887 and 4,219,627. As is well known in the block copolymer art, tapered copolymer blocks can be incorporated in the multiblock copolymer by copolymerizing a mixture of conjugated diene and vinyl-aromatic hydrocarbon monomers utilizing the difference in their copolymerization reactivity rates. Various patent specifications describe the preparation of multiblock copolymers containing tapered copolymer blocks including U.S. patent specifications Nos. 3,251,905; 3,265,765; 3,639,521 and 4,208,356 the disclosures of which are incorporated herein by reference.

Conjugated dienes which may be utilized to prepare the polymers and copolymers are those having from 4 to 8 carbon atoms and include 1,3-butadiene, 2-methyl-1,3-butadiene (isoprene), 2,3-dimethyl-1,3-butadiene, 1,3-pentadiene and 1,3-hexadiene. Mixtures of such conjugated dienes may also be used. The preferred conjugated diene is 1,3-butadiene.

Vinyl-aromatic hydrocarbons which may be utilized to prepare copolymers include styrene, o-methylstyrene, p-methylstyrene, p-tert-butylstyrene, 1,3-dimethylstyrene, alpha-methylstyrene, vinylnaphthalene and vinylanthracene. The preferred vinyl-aromatic hydrocarbon is styrene.

It should be observed that the above-described polymers and copolymers may, if desired, be readily prepared by the methods set forth above. However, since many of these polymers and copolymers are commercially available, it is usually preferred to employ the commercially available polymer as this serves

to reduce the number of processing steps involved in the overall process. The hydrogenation of these polymers and copolymers may be carried out by a variety of well established processes including hydrogenation in the presence of such catalysts as Raney Nickel, noble metals such as platinum and palladium and soluble transition metal catalysts. Suitable hydrogenation processes which can be used are ones wherein the diene-containing polymer or copolymer is dissolved in an inert hydrocarbon diluent such as cyclohexane and hydrogenated by reaction with hydrogen in the presence of a soluble hydrogenation catalyst. Such processes are disclosed in U.S. patent specifications Nos. 3,133,986 and 4,226,952, the disclosures of which are incorporated herein by reference. The polymers and copolymers are hydrogenated in such a manner as to produce hydrogenated polymers and copolymers having a residual unsaturation content in the polydiene block of less than 5 per cent and suitably more than 0.5 per cent of their original unsaturation content prior to hydrogenation, while the average hydrogenation degree of the monoalkenylaromatic hydrocarbon units in the hydrogenated block copolymer is less than 10% of its original value.

In general, any materials having the ability to react with the base polymer, in free radical initiated reactions are operable for the purposes of the invention.

In order to incorporate functional groups into the base polymer, monomers capable of reacting with the base polymer, for example, in solution or in the melt by free radical mechanism are necessary. Monomers may be polymerizable or non-polymerizable; however, preferred monomers are non-polymerizable or slowly polymerizing.

The monomers must be ethylenically unsaturated in order to take part in free radical reactions. We have found that by grafting unsaturated monomers which have a slow polymerization rate the resulting graft copolymers contain little or no homopolymer of the unsaturated monomer and contain only short grafted monomer chains which do not phase separate into separate domains.

The class of preferred monomers which will form graft polymers within the scope of the present invention have one or more functional groups or their derivatives such as carboxylic acid groups and their salts, anhydrides, esters, imide groups, amide groups, acid chlorides and the like in addition to at least one point of unsaturation.

These functionalities can be subsequently reacted with other modifying materials to produce new functional groups. For example a graft of an acid-containing monomer could be suitably modified by esterifying the resulting acid groups in the graft with appropriate reaction with hydroxy-containing compounds of varying carbon atoms lengths. The reaction could take place simultaneously with the grafting or in a subsequent post modification reaction.

The grafted polymer will usually contain in the range of from 0.02 to 20, preferably 0.1 to 10, and most preferably 0.2 to 5 weight per cent of grafted portion.

The preferred modifying monomers are unsaturated mono- and polycarboxylic-containing acids ($C_3$-$C_{10}$) with preferably at least one olefinic unsaturation, and anhydrides, salts, esters, imides, amides or anhydrides derived from said acids.

Examples of such acids, anhydrides and derivatives thereof include maleic acid, fumaric acid, itaconic acid, citraconic acid, acrylic acid, glycidyl acrylate, cyanoacrylates, hydroxy $C_1$-$C_{20}$ alkyl methacrylates, acrylic polyethers, acrylic anhydride, methacrylic acid, crotonic acid, isocrotonic acid, mesaconic acid, angelic acid, maleic anhydride, itaconic anhydride, citraconic anhydride, acrylonitrile, methacrylonitrile, sodium acrylate, calcium acrylate, and magnesium acrylate.

Other monomers which can be used either by themselves or in combination with one or more of the carboxylic acids or derivatives thereof include $C_2$-$C_{50}$ vinyl monomers such as acrylamide, acrylonitrile and monovinyl-aromatic compounds, i.e. styrene, chlorostyrenes, bromostyrenes, $\alpha$-methyl-styrene, vinylpyridines and the like.

Other monomers which can be used are $C_4$ to $C_{50}$ vinyl esters, vinyl ethers and allyl esters, such as vinyl butyrate, vinyl laurate, vinyl stearate, vinyl adipate and the like, and monomers having two or more vinyl groups, such as divinylbenzene, ethylene dimethacrylate, triallyl phosphite, dialkyl cyanurates and triallyl cyanurate.

The preferred monomers to be grafted to the block copolymers according to the present invention are maleic anhydride, maleic acid, fumaric acid and their derivatives and sulphonic acids. It is well known in the art that these monomers do not polymerize easily.

Of course, mixtures of monomer can be also added so as to achieve graft copolymers in which the graft chains at least two different monomers therein (in addition to the base polymer monomers).

The modified block copolymer for blending according to the present invention may be prepared by graft-reacting an acid moiety or its derivative with an aromatic vinyl compound-conjugated diene compound block copolymer containing at least one polymer block B mainly composed of a conjugated diene compound, at least one polymer block A mainly composed of an aromatic vinyl compound, wherein said

graft reaction is carried out by melt or solution mixing said block copolymer and said acid moiety in the presence of a free radical initiator and wherein each A is a polymerized monoalkenyl-aromatic hydrocarbon block having an average molecular weight of 2,000 to 115,000; each B is a polymerized conjugated diene hydrocarbon block having an average molecular weight of 20,000 to 450,000; the blocks A constitute 5-95 weight per cent of the copolymer; preferably in the range of from 35 to 50 mol per cent and particularly from 40 to 55 mol per cent of the condensed butadiene units in block B have a 1,2-configuration; the unsaturation of the block B is reduced to less than 5% of the original unsaturation; and the unsaturation of the A blocks is preferably above 90% of the original unsaturation. In the starting hydrogenated block copolymers, an average of less than 10% of the monoalkenyl-aromatic hydrocarbon units are hydrogenated.

This process has been described in European patent application No. 0173380 A.

The toughened compositions of this invention can be prepared by melt blending, in a closed system, a polyamide or a polyester and at least one modified block copolymer into a uniform mixture in a multi-screw extruder such as a Werner Pfleiderer extruder having generally 2-5 kneading blocks and at least one reverse pitch to generate high shear, or other conventional plasticating devices such as a Brabender, Banbury mill, or the like. Alternatively, the blends may be made by coprecipitation from solution, blending or by dry mixing together of the components followed by melt fabrication of the dry mixture by extrusion.

The polyamide and polyester blends of the present invention may be prepared by melt-blending from 50 per cent to 97 per cent by weight, preferably from 70 per cent to 95 per cent or more preferably 75 per cent to about 90 per cent of the polyamide or polyester, and from 3 per cent to 50 per cent by weight, preferably from 5 per cent to 30 per cent or more preferably 10 per cent to 25 per cent functionalized block copolymer.

The compositions of the invention may be modified by one or more conventional additives such as stablizers and inhibitors of oxidative, thermal, and ultraviolet light degradation; lubricants and mould release agents, colourants including dyes and pigments, fibrous and particulate fillers and reinforcements, nucleating agents, plasticizers, etc.

The stabilizers can be incorporated into the composition at any stage in the preparation of the thermoplastic composition. Preferably the stabilizers are included early to preclude the initiation of degradation before the composition can be protected. Such stabilizers must be compatible with the composition.

The oxidative and thermal stabilizers useful in the materials of the present invention include those used in addition polymers generally. They include, for example, up to 1 per cent by weight, based on the weight of polyamide of Group I metal halides, e.g., sodium, potassium, lithium with cuprous halides, e.g., chloride, bromide, iodide, sterically hindered phenols, hydroquinones, and varieties of substituted members of those groups and combinations thereof.

The ultraviolet light stabilizers, e.g., up to 2.0 per cent, based on the weight of polyamide or polyester, can also be those used in addition polymers generally. Examples of ultraviolet light stabilizers include various substituted resorcinols, salicylates, benzotriazoles, benzophenones, and the like.

Suitable lubricants and mould release agents, e.g., up to 1.0 per cent, based on the weight of the composition, are stearic acid, stearic alcohol, stearamides, organic dyes such as nigrosine, etc., pigments, e.g., titanium dioxide, cadmium sulphide, cadmium sulphide selenide, phthalocyamines, ultramarine blue, carbon black, etc. up to 50 per cent, based on the weight of the composition, of fibrous and particulate fillers and reinforcements, e.g., carbon fibres, glass fibres, amorphous silica, asbestos, calcium silicate, aluminium silicate, magnesium carbonate, kaolin, chalk, powdered quartz, mica, feldspar, etc.; nucleating agent, e.g., talc, calcium fluoride, sodium phenyl phosphinate, alumina, and finely divided polytetrafluoroethylene, etc.; plasticizers, up to about 20 per cent, based on the weight of the composition, e.g. dioctyl phthalate, dibenzyl phthalate, butyl benzyl phthalate, hydrocarbon oils, N-normal-butyl benzene sulfonamide, ortho- and para-toluene ethyl sulfonamide, etc. The colourants (dyes and pigments) can be present in an amount of up to about 5.0 per cent by weight, based on the weight of the composition.

It is to be understood that in the specification and claims herein, unless otherwise indicated, when in connection with melt-blending, the amount of the polyamide or polyester or block copolymer is expressed in terms of per cent by weight it is meant per cent by weight based on the total amount of these materials which is employed in the melt-blending.

The invention is further illustrated by means of the following examples. Parts and percentages are by weight unless otherwise specifically noted. The moulded bars were tested using the following test procedures in the dry-as-moulded state:

Notched Izod toughness: at each end ASTM D-256-56
Heat Distortion Temperature: ASTM D-648
Flexural Modulus: ASTM D-970-58T.

Examples 1-6 and Comparative Experiments D-G

Preparation of Modified Block Copolymer by Melt Process

The block copolymer used in the following example was KRATON G-1652 Rubber (KRATON is a trade name for a commercial S-EB-S material). This polymer was melt reacted with maleic anhydride and Lupersol 101 (Lupersol is a trade name for 2,5-dimethyl-2,5-di(t-butylperoxy)hexane) in a 30 mm diameter corotating twin screw extruder.

The reactants were premixed by tumbling in polyethylene bags, and then fed into the extruder. All extrusion conditions except for reactant concentrations were kept constant. The melt temperature was varied from 150 °C in the feed zone to 260 °C at the die. A screw speed of 350 rpm was used.

Samples prepared in the above manner were analyzed for bound maleic by extracting the soluble fraction in refluxing tetrahydrofuran, recovering the soluble fraction by precipitation of the extractant into 2-propanol and titrating the dried precipitate using the method described in Examples 1 and 2. Table 1 shows the reactant concentrations examined, as well as analytical results for the material prepared.

TABLE 1

| Polymer | Wt.% Maleic Anhydride Added | Wt.% Lupersol 101 Added | Wt.% Maleic Anhydride Grafted onto THF Solubles |
|---|---|---|---|
| X | 3 | 0.01 | 0.2 |
| Y | 3 | 0.10 | 1.6 |

Blending of N 6,6 and Modified Copolymers Prepared by Melt Process

Blends of nylon 6,6 with both modified and unmodified KRATON G-1652 were prepared.

Prior to blending, the modified block copolymer was dried at 100 °C under sub-atmospheric pressure with a nitrogen purge for four hours. The thermoplastic polyamide used in this example was a commercial nylon 6,6 moulding grade, Zytel 101 (Zytel is a trade name) obtained from E.I. DuPont Company. Prior to all processing steps, the nylon 6,6 and its blends were dried at 120 °C for four hours under sub-atmospheric pressure with a nitrogen purge.

Blends of nylon 6,6 with both unmodified and modified block copolymer were prepared in a 30 mm diameter corotating twin screw extruder. The blend components were premixed by tumbling in polyethylene bags. A stabilizer package, 0.5 wt% of the total material, made up of a 3-1 ratio of a phosphite and a sterically hindered phenol antioxidant was included in the composition. The extruder melt temperature profile varied from 270 °C in the feed zone to 285 °C at the die. A screw rotations per minute (rpm) of 300 was used. The extrudate was pelletized and injection moulded into test specimens. The formulations and physical properties are shown in Table 1.

The formulations and physical properties are shown in Table 2. The physical properties are for dry as moulded material.

TABLE 2

Composition (parts by weight)

| Comparative Experiment | D | E | F | G | | | | | | |
|---|---|---|---|---|---|---|---|---|---|---|
| Example | | | | | 1 | 2 | 3 | 4 | 5 | 6 |
| Component | | | | | | | | | | |
| Nylon 6,6 | 100 | 90 | 80 | 70 | 80 | 90 | 80 | 70 | 80 | 80 |
| Unmodified Kraton G-1652 | -- | 10 | 20 | 30 | -- | -- | -- | -- | 10 | 18 |
| Modified Block Copolymer X | -- | -- | -- | -- | 20 | -- | -- | -- | -- | -- |
| Modified Block Copolymer Y | -- | -- | -- | -- | -- | 10 | 20 | 30 | 10 | 2 |
| Room Temperature 3.2 mm Notched Izod (J/m) | 43 | 69 | 69 | 80 | 336/982* | 176 | 1057 | 1223 | 1223 | 187 |
| -29 °C 3.2 mm Notched Izod (J/m) | 37 | -- | -- | -- | -- | 64 | 187 | 662/918* | -- | -- |
| Flexural Modulus, $MN/m^2$ | 3030 | -- | -- | -- | -- | 2820 | 2030 | 1540 | -- | -- |
| Heat Distortion Temperature at 1.82 $MN/m^2$, °C | 82 | -- | -- | -- | -- | 64 | 59 | 60 | -- | -- |

* Injection moulded samples are non-uniform. A/B (e.g. A=336 and B=982) refers to values for pieces formed close to the mould gate (A) and at the dead end (B).

The above examples show that the compositions according to this invention in Examples 3-8 exhibit a substantial improvement in impact strength over the thermoplastic polyamide or blends of the thermoplastic polyamide and unmodified block copolymer. In addition, the compositions according to the invention exhibit a good balance of toughness over a wide temperature range and desirable low strain properties such as modulus and heat distortion temperature.

Example 7 and Comparative Experiments H and I

Impact Resistant Filled Blends of Thermoplastic Polyamides

The thermoplastic polyamide used in this example was RTP283, a trade name for a carbon fibre filled nylon 6,6 containing 20% fibre, available from Fiberite Corporation. This nylon was blended in the usual manner with both KRATON G-1652 and modified KRATON G-1652 containing 1.2 wt% bound maleic anhydride. Dry as moulded physical properties of the materials are given in Table 3.

TABLE 3

| | Composition (parts by weight) | | |
|---|---|---|---|
| Comparative Experiment | H | I | |
| Example | | | 7 |
| Component | | | |
| RTP283 | 100 | 80 | 80 |
| KRATON G-1652 | -- | 20 | -- |
| Modified KRATON G-1652 | -- | -- | 20 |
| 3.2 mm Dry as Moulded Room Temperature Notched Izod (J/m) | 75 | 112 | 203 |

Example 7 shows that the modified block copolymers can be used to prepare impact resistant filled thermoplastic polyamides.

Examples 8-12 and Comparative Experiments K-N

Preparation of Modified Block Copolymers by Melt Process

The block copolymer used in the following example was KRATON G-1652 Rubber, a commercial S-EB-S material. This polymer was melt reacted with maleic anhydride and 2,5-dimethyl-2,5-di(t-butylperoxy)-hexane (Lupersol 101) in a 30 mm diameter corotating twin screw extruder.

The reactants were premixed by tumbling in polyethylene bags, and then fed into the extruder. All extrusion conditions except for reactant concentrations were kept constant. The melt temperature was varied from 150 °C in the feed zone to 260 °C at the die. A screw speed of 350 rpm was used.

Samples prepared in the above manner were analyzed for bound maleic by extracting the soluble fraction in refluxing tetrahydrofuran, recovering the soluble fraction by precipitation of the extractant into 2-propanol, and colourimetric titrating the dried precipitate with potassium methoxide and phenolphthalein indicator. Table 4 shows the reactant concentrations examined, as well as analytical results for the materials prepared.

TABLE 4

| Polymer | Wt.% Maleic Anhydride added | Wt.% Lupersol 101 added | Wt.% Maleic Anhydride Grafted onto THF Solubles |
|---|---|---|---|
| 3A | 3 | 0.01 | 0.2 |
| 3B | 3 | 0.1 | 1.6 |
| 3C | 5 | 0.5 | 4.6 |

Blending of PBT and Modified Block Copolymers Prepared by Melt Process

Blends of PBT with both modified and unmodified KRATON G-1652 were prepared in the manner described hereinafter. The block copolymers were dried for four hours before blending with PBT.

Prior to blending, modified block copolymers X and Y were dried at 100 °C under sub-atmospheric pressure with a nitrogen purge until water could not be detected by infrared measurement. The thermoplastic polyester used in this example was a commercial grade PBT, Valox 310, a moulding grade obtained from General Electric Company. Prior to all processing steps, the PBT and its blends were dried at 120 °C for four hours under sub-atmospheric pressure with a nitrogen purge.

Blends of PBT with both modified block copolymers were prepared in a 30 mm diameter corotating twin screw extruder. The blend components were premixed by tumbling in polyethylene bags. A stabilizer package, 0.5 wt% of the total material, made up of a 3:1 ratio of a phosphite and sterically hindered phenol antioxidant was included in the composition. The extruder melt temperature profile varied from 230 °C in the feed zone to 240 °C at the die. A screw speed of 300 rotations per minute (rpm) was used. The extrudate was pelletized and injection moulded into test specimens. The formulations and physical properties are shown in Table 5.

TABLE 5

| | Composition (parts by weight) | | | | | | | | |
|---|---|---|---|---|---|---|---|---|---|
| Comparative Experiment | K | L | M | N | | | | | |
| Example | | | | | 8 | 9 | 10 | 11 | 12 |
| PBT | 100 | 90 | 80 | 70 | 70 | 90 | 80 | 70 | 80 |
| Unmodified Kraton G-1652 | -- | 10 | 20 | 30 | -- | -- | -- | -- | -- |
| Modified Block Copolymer 3A | -- | -- | -- | -- | 30 | -- | -- | -- | -- |
| Modified Block Copolymer 3B | -- | -- | -- | -- | -- | 10 | 20 | 30 | -- |
| Modified Block Copolymer 3C | -- | -- | -- | -- | -- | -- | -- | -- | 20 |
| Room Temperature 3.2 mm Notched Izod (J/m) | 37 | 53 | 80 | 112 | 235 | 117 | 155 | 950 | 822/256* |
| Flexural Modulus, $MN/m^2$ | 2360 | -- | -- | -- | -- | 2111 | 1732 | 1483 | -- |
| Heat Distortion Temperature at 1.82 $MN/m^2$, °C | 56 | -- | -- | -- | -- | 52 | 51 | 49 | -- |

* Injection moulded samples are non-uniform. A/B refers to values for pieces formed close to the mould gate (A) and at the dead end (B).

The examples 8-12 show that the compositions according to this invention exhibit a substantial improvement in impact strength over the thermoplastic polyester or blends of the thermoplastic polyester and unmodified block copolymer. In addition, the compositions according to the invention exhibit a good balance of toughness over a wide temperature range and desirable low strain properties such as modulus and heat distortion temperature.

## Claims

1. Impact resistant polymeric compositions comprising a polyamide having a number average molecular weight of at least 5,000 or a thermoplastic polyester and a functionalized selectively hydrogenated block copolymer of the formula $B_n(AB)_oA_p$ where n = 0 or 1, o is an integer of at least one, p = 0 or 1, to which has been grafted an unsaturated carboxylic acid or a salt, ester, anhydride, imide, amide or acid chloride derived therefrom, by means of a radical initiator, characterized in that:
   (1) the polyamide or the thermoplastic polyester is present in the range of from 50 to 97 per cent by weight;
   (2) the functionalized hydrogenated block copolymer is present in the range of from 3 to 50 per cent by weight;
   (3) each A is a polymerized monoalkenyl-aromatic hydrocarbon block having an average molecular weight in the range of from 2,000 to 115,000, in which the hydrogenation degree of the monoalkenyl-aromatic hydrocarbon units is on average less than 10%;
   (4) each B prior to hydrogenation is a polymerized conjugated diene hydrocarbon block having an average molecular weight in the range of from 20,000 to 450,000 and having an unsaturation which is less than 5% of the original unsaturation;
   (5) the blocks A constitute in the range of from 5 to 95 per cent by weight of the copolymer; and
   (6) substantially all of the unsaturated carboxylic acid, salt thereof or ester; anhydride, imide, amide or acid chloride derived therefrom are grafted to the block copolymer at secondary or tertiary carbon positions in the B blocks, by using a free radical initiator in a concentration of from 0.01 to 1.0 per cent by weight.

2. A composition as claimed in claim 1 in which the block copolymer is a styrene-butadiene-styrene block copolymer.

3. A composition as claimed in any one of the preceding claims in which A is a polymerized styrene block having an average molecular weight in the range of from 4,000 to 60,000.

4. A composition as claimed in any one of the preceding claims in which B is a polymerized butadiene block having an average molecular weight in the range of from 35,000 to 150,000.

5. A composition as claimed in any one of claims 2 to 4 in which 35%-50% of the condensed butadiene units have 1,2-configuration.

6. A composition as claimed in any one of claims 1 to 5 in which the acid compound is maleic anhydride.

7. A composition as claimed in any one of the preceding claims in which the grafted unsaturated carboxylic acid compound or derivative thereof is present in the functionalized block copolymer in an amount in the range of from 0.2 to 5 per cent by weight.

8. A composition as claimed in any one of claims 1 to 7 in which the polyamide or polyester is present in an amount in the range of from 70 to 95 per cent.

9. A composition as claimed in any one of the preceding claims 1 to 8 in which the polyamide is nylon 6,6.

10. A composition as claimed in any one of claims 1 to 9 in which the polyamide resin is selected from the group consisting of polyhexamethylene adipamide, polyhexamethylene sebacamide, polycaprolactam, polyhexamethylene isophthalamide, polyhexamethylene tere-coisophthalamide and mixtures and copolymers thereof.

11. A composition as claimed in any one of the preceding claims 1 to 10 in which the polyester is poly-(butylene terephthalate).

## Patentansprüche

1. Schlagzähe polymere Zusamensetzungen, bestehend aus einem Polyamid mit einem zahlenmittleren Molekulargewicht von mindestens 5000 oder einem thermoplastischen Polyester und einem funktionalisierten, selektiv hydrierten Blockcopolymer der Formel $B_n(AB)_oA_p$, wobei n 0 oder 1, o eine ganze Zahl von mindestens eins und p 0 oder 1 bedeuten, auf das eine ungesättigte Carbonsäure oder ein davon abgeleiteter Ester bzw. ein davon abgeleitetes Salz, Anhydrid, Imid, Amid oder Säurechlorid mittels eines radikalischen Initiators aufgepfropft ist, dadurch gekennzeichnet, daß
   (1) das Polyamid oder der thermoplastische Polyester in einer Menge im Bereich von 50 bis 97 Gew.-% vorliegt,
   (2) das funktionalisierte, hydrierte Blockcopolymer in einer Menge im Bereich von 3 bis 50 Gew.-% vorliegt,
   (3) A jeweils ein Block aus polymerisiertem monoalkenylaromatischem Kohlenwasserstoff mit einem mittleren Molekulargewicht im Bereich von 2000 bis 115 000 bedeutet, worin der Hydriergrad der monoalkenylaromatischen Kohlenwasserstoffeinheiten im Durchschnitt weniger als 10% betragt,
   (4) B jeweils vor Hydrierung ein Block aus polymerisiertem konjugiertem Dien mit einem mittleren Molekulargewicht im Bereich von 20 000 bis 450 000 und einer Ungesättigtheit von weniger als 5% der ursprünglichen Ungesättigtheit bedeutet,
   (5) die Blöcke A 5 bis 95 Gew.-% des Copolymers ausmachen und
   (6) die ungesättigte Carbonsäure oder der davon abgeleitete Ester bzw. das davon abgeleitete Salz, Anhydrid, Imid, Amid oder Säurechlorid im wesentlichen vollständig auf das Blockcopolymer an Kohlenstoffatomen in sekundärer oder tertiärer Stellung in den Blöcken B durch Verwendung eines radikalischen Initiators in einer Konzentration von 0,01 bis 1,0 Gew.-% aufgepfropft ist.

2. Zusamensetzung nach Anspruch 1, worin das Blockcopolymer ein Styrol-Butadien-Styrol-Blockcopolymer ist.

3. Zusamensetzung nach einem der vorhergehenden Ansprüche, worin A ein polymerisierter Styrolblock mit einem mittleren Molekulargewicht im Bereich von 4000 bis 60 000 ist.

4. Zusammensetzung nach einem der vorhergehenden Ansprüche, worin B ein polymerisierter Butadienblock mit einem mittleren Molekulargewicht im Bereich von 35 000 bis 150 000 ist.

5. Zusammensetzung nach einem der Ansprüche 2 bis 4, worin 35%-50% der kondensierten Butadieneinheiten eine 1,2-Konfiguration aufweisen.

6. Zusammensetzung nach einem der Ansprüche 1 bis 5, worin die Säureverbindung Maleinsäureanhydrid ist.

7. Zusammensetzung nach einem der vorhergehenden Ansprüche, worin die aufgepfropfte Verbindung aus ungesättigter Carbonsäure oder deren Derivat im funktionalisierten Blockcopolymer in einer Menge im Bereich von 0,2 bis 5 Gew.-% vorliegt.

8. Zusammensetzung nach einem der Ansprüche 1 bis 7, worin das Polyamid bzw. der Polyester in einer Menge im Bereich von 70 bis 95% vorliegt.

9. Zusammensetzung nach einem der vorhergehenden Ansprüche 1 bis 8, worin das Polyamid Nylon-6,6 ist.

10. Zusammensetzung nach einem der Ansprüche 1 bis 9, worin das Polyamidharz aus der Gruppe Polyhexamethylenadipinsäurediamid, Polyhexamethylensebacinsäurediamid, Polycaprolactam, Polyhexamethylenisophthalsäurediamid, Polyhexamethylenterephthal/isophthalsäurediamid und deren Mischungen und Copolymeren ausgewählt ist.

11. Zusammensetzung nach einem der vorhergehenden Ansprüche 1 bis 10, worin der Polyester Polybutylenterephthalat ist.

## Revendications

1. Compositions polymère résistant au choc comportant un polyamide ayant un poids moléculaire moyen en nombre d'au moins 5000 ou un polyester thermoplastique; et un copolymère séquencé hydrogéné, sélectivement fonctionnalisé, de la formule $B_n(AB)_oA_p$ dans laquelle n = 0 ou 1, o est un nombre entier d'au moins un, p = 0 ou 1, auquel a été greffé un acide carboxylique insaturé ou bien un sel, un ester, un anhydride, un imide, un amide ou un chlorure d'acide qui en dérive, au moyen d'un initiateur de radicaux, caractérisé en ce que:
   (1) le polyamide ou la matière thermoplastique est présente dans la gamme de 50 à 97% en poids;
   (2) le copolymère séquencé hydrogéné fonctionnalisé est présent dans la gamme de 3 à 50% en poids;
   (3) chaque A est une séquence polymérisée à base d'hydrocarbure aromatique monoalcénylé, présentant un poids moléculaire moyen dans la gamme de 2 000 à 115 000, dans lequel le degré d'hydrogénation des motifs hydrocarbure aromatique monoalcénylé est en moyenne inférieur à 10%;
   (4) chaque B avant l'hydrogénation est une séquence polymérisée à base d'hydrocarbure diénique conjugué, possédant un poids moléculaire moyen dans la gamme de 20 000 à 450 000 et ayant une insaturation qui est inférieure à 5% de l'insaturation originale;
   (5) les séquences A constituent une gamme de 5 à 95% en poids du copolymère; et
   (6) pratiquement tous les acides carboxyliques insaturés, ou bien les sels, esters, anhydrides, imides, amide ou chlorure d'acide qui en dérivent sont greffés sur le copolymère séquencé au niveau des positions de carbone secondaire ou tertiaire dans les séquences B en utilisant un initiateur de radicaux libres selon une concentration de 0,01 à 1,0% en poids.

2. Une composition telle que revendiquée dans la revendication 1, dans laquelle le copolymère séquencé est un copolymère séquencé de styrène-butadiène-styrène.

3. Une composition telle que revendiquée dans l'une quelconque des revendications précédentes, dans laquelle A est une séquence styrène polymérisée présentant un poids moléculaire moyen dans la gamme de 4 000 à 60 000.

4. Une composition telle que revendiquée dans l'une quelconque des revendications précédentes, dans laquelle B est une séquence butadiène polymérisée présentant un poids moléculaire moyen dans la gamme de 35 000 à 150.000.

5. Une composition telle que revendiquée dans l'une quelconque des revendications 2 à 4, dans laquelle de 35 à 50% des motifs butadiène condensés ont une configuration 1,2.

6. Une composition telle que revendiquée dans l'une quelconque des revendications 1 à 5, dans laquelle le composé acide est l'anhydride maléique.

7. Une composition telle que revendiquée dans l'une quelconque des revendications précédentes, dans laquelle le composé greffé de type acide carboxylique insaturé ou son dérivé est présent dans le copolymère séquencé fonctionnalisé en une quantité dans la gamme de 0,2 à 5% en poids.

8. Une composition telle que revendiquée dans l'une quelconque des revendications 1 à 7, dans laquelle le polyamide ou le polyester est présent selon une quantité dans la gamme de 70 à 95%.

9. Une composition telle que revendiquée dans l'une quelconque des revendications précédentes 1 à 8, dans laquelle le polyamide est le nylon 6,6.

10. Une composition telle que revendiquée dans l'une quelconque des revendications 1 à 9, dans laquelle la résine polyamide est choisie dans le groupe constitué du polyhexaméthylène adipamide, du polyhexaméthylène sébacamide, du polycaprolactame, du polyhexaméthylène isophtalamide, du polyhexaméthylène téré-coisophtalamide ainsi que des mélanges et des copolymères de ceux-ci.

11. Une composition selon l'une quelconque des revendications précédentes 1 à 10, dans laquelle le polyester est le poly(téréphtalate de butylène).